# EUROPEAN PATENT SPECIFICATION

(11) **EP 3 068 564 B1**
(45) Date of publication and mention of the grant of the patent: **18.07.2018**
(21) Application number: 14793789.0
(22) Date of filing: 05.11.2014
(51) Int. Cl.: B22F 3/22, B28B 1/24, C04B 41/81, C04B 33/32

(54) **A METHOD OF DYEING METALLIC OBJECTS IN THE COURSE OF A POWDER INJECTION MOULDING PROCESS**
VERFAHREN ZUM FÄRBEN METALLISCHER GEGENSTÄNDE IM VERLAUF EINES PULVERSPRITZGIESSVERFAHRENS
PROCÉDÉ DE COLORATION D'OBJETS MÉTALLIQUES AU COURS D'UN PROCESSUS DE MOULAGE PAR INJECTION DE POUDRE

(30) Priority: 13.11.2013 EP 13005336
(43) Date of publication of application: 21.09.2016
(73) Proprietor: Linde AG, 80331 München (DE)
(72) Inventor: BARTLOME, Christian, CH-2822 Courroux (CH)
(74) Representative: Gellner, Bernd
(86) International application number: PCT/EP2014/002962
(87) International publication number: WO 2015/070960

(56) References cited:
- WO-A1-2013/001201
- US-A1- 2012 294 749
- DATABASE WPI Week 200336 Thomson Scientific, London, GB; AN 2003-378890 XP002722843, & TW 494 092 A (HUANG H) 11 July 2002 (2002-07-11)

## Description

The invention relates to a method of dyeing metallic objects in the course of a powder injection moulding process.
The technique of powder injection moulding (PIM) is commonly used to manufacture various types of metallic and ceramic objects. Metal powder or ceramic powder is combined with a binder and processed in an injection moulding process. Depending on the manufactured material the powder injection moulding is called a metal injection moulding (MIM) or a ceramic injection moulding (CIM).
The powder injection moulding (PIM) is a multi-step process that combines the plastic injection moulding and consolidation of powder metallurgy used by any type of sintering. It allows the production of metallic and ceramic components. In such a process, the first step is to obtain a masterbatch (or "feedstock") suitable for the intended application. This step involves combining metal or ceramic powders with wax and plastic binders to produce the feedstock mix that is injected as a liquid into a hollow mould using plastic injection moulding machines. Masterbatches are made of a mixture of organic matter (or polymeric binder) and inorganic powders (metal or ceramic). Then, the masterbatch is injected as a thermoplastic. Finally, the part is then debinded.
More specifically, masterbatches consist of polymeric materials acting as a binder and metal or ceramic powders. The masterbatch is heated and injected into the mould. This results in an injected polymer powder room charge, called "green" part. The green part is cooled and demoulded in the plastic moulding machine. The green part has the same shape as the final object but larger.
The polymers used to allow injection of the material must then be removed by debinding. Thus, the binder is extracted using solvent, thermal furnaces, catalytic process, or a combination of such methods. The resulting, fragile and porous part, in a condition called "brown" stage, requires the metal to be condensed in a furnace process called sintering. By sintering, the brown stage is consolidated while keeping the geometrical form of the green part.
Sintering is defined as the thermal treatment of a powder or compact at a temperature below the melting point of the main constituent, for the purpose of increasing its strength by bonding of the particles. During sintering atomic diffusion takes place and the particles are welded together.
In order to dye the metallic and ceramic objects in the course of a powder injection moulding process, colorants, especially in the form of powder, are used.
WO 2013/001201 A1 describes a method of producing a masterbatch of coloured moulding parts. A mixture comprising inorganic powder and a colorant is prepared and processed in a process of spray-drying. This way a spray dried powder can be obtained. Said spray dried powder is processed in a pre-sintering step. The pre-sintered powder is mixed with an organic binder, preferably polymeric coloured powder, to obtain the masterbatch.
However, dyeing metallic and ceramic objects with colorant coloured powder gives only pale and pastel colours. It is not possible to obtain very colourful and bright colours of metallic and ceramic objects. US 2012/294749 A discloses the production of metallic objects by powder injection moulding. Depending on the starting composition differently coloured parts are obtained after binder removal in air. Thus, it is an object of the invention to provide a method of dyeing metallic objects to obtain more colourful and brighter, especially brilliant and/or rich colours of the metallic objects.

### Disclosure of the invention

This object is achieved by a method of dyeing metallic objects in the course of a powder injection moulding process with the features of the independent claims. According to the invention, the metallic objects are supplied with a dyeing gas. Composition and amount of the dyeing gas are adjusted according to a desired colour of the metallic objects.

The method according to the invention is suitable for dyeing metallic objects (in the course of a MIM process). In the following description, the metallic objects are simply referred to as "objects".

### Advantages of the invention

The dyeing gas reacts chemically with components of the objects. The dyeing gas reacts particularly with pigments, more particularly with metallic oxides. Different dyeing gases react with different components of the objects. Thus, the objects assume a different colour, depending on the composition of the dyeing gas. By adjusting the composition of the dyeing gas, the colour of the objects can also be adjusted. Hence, a composition of the dyeing gas is chosen according to the desired colour of the objects.
By the chemical reaction of the dyeing gas and the corresponding components of the objects, the corresponding colour can be intensified. The objects assume colourful and bright colours and not only pale and pastel colours. According to the invention, more colourful and brighter colours can be achieved than by dyeing the objects with coloured powder as a colorant.
By precisely adjusting composition and amount of the dyeing gas, kind and intensity of the colouring of the objects can precisely be adjusted as well. Thus, the objects can assume the desired colour. Moreover, the colour of the objects is reproducible. With a clean environment and an unpolluted atmosphere during the powder injection moulding, it can be ensured that the dyeing gas and the components of the objects always react (at least almost) in the same manner with each other. It can be guaranteed that objects of the same production series have the same colour. It can also be achieved that different objects of different production series have the same colour.

Preferably, the dyeing gas is injected during a phase of pre-sintering and/or during a phase of sintering. The sintering phase is usually carried out under a controlled protective atmosphere in order to prevent oxidation and to promote the reduction of surface oxides as well as to control the carbon content to a desired level throughout the whole sintered objects. According to the invention, the dyeing gas is injected during the sintering phase, in order to enable the chemical reaction of the dyeing gas and the corresponding components of the objects. Particularly, the dyeing gas can be injected by special nozzles.

Usually sintering atmospheres contain about 90% nitrogen and 10% hydrogen, sometimes with small additions of CH₄. Particularly, the dyeing gas can have a percentage of up to 100 % of the sintering atmosphere.

In a preferred embodiment, an oxidising, a reducing, or an inert gas, or a mixture of those gases is used as the dyeing gas. The oxidising, reducing, or inert gases are chosen and adjusted according to their reactions with corresponding components of the objects.

Preferably, oxygen, nitrogen, argon, hydrogen, acetylene, helium, carbon dioxide, carbon monoxide, propane, methane or mixtures thereof are used as dyeing gas. For example oxygen can be used in a mixture of 2% oxygen in argon to dye objects blue.

Advantageously, the objects have a temperature of at least 450°C. If the objects have a temperature of at least 450°C, their components, particularly metallic oxides, react with the dyeing gas. Particularly, the sintering atmosphere has a temperature of at least 450°C. Particularly, a special temperature can be adjusted, at which a special chemical reaction is favoured.

In an advantageous embodiment of the invention, the objects are used to produce jewellery. Objects with brilliant and bright colours, which can be produced by the present invention, are particularly suitable for jewellery, e.g. watches, necklaces, or rings. The method of dyeing objects according to the invention can be included as a production step in the production process of jewellery.

The invention further relates to a use of a dyeing gas for dyeing metallic objects in the course of a powder injection moulding process. The metallic objects are supplied with the dyeing gas. Composition and amount of the dying gas are adjusted according to a desired colour of the metallic objects. Embodiments and advantages of the use of a dyeing gas according to the invention arise from the above description of the method according to the invention in an analogous way.

## Claims

1. A method of dyeing metallic objects in the course of a powder injection moulding process **characterised in that** the metallic objects are supplied with a dyeing gas, wherein composition and amount of the dyeing gas are adjusted according to a desired colour of the metallic objects.

2. The method of claim 1, wherein the dyeing gas is injected during a phase of pre-sintering and/or during a phase of sintering.

3. The method of claim 1 or 2, wherein oxidising, reducing, or inert gases, or their mixtures are used as the dyeing gas.

4. The method of any one of the previous claims, wherein argon with oxygen or argon with hydrogen is used as dyeing gas.

5. The method of any one of the previous claims, wherein the metallic objects have a temperature of at least 450°C.

6. The method of any one of the previous claims, wherein the dyed metallic objects are used as jewellery.

7. Use of a dyeing gas for dyeing metallic objects in the course of a powder injection moulding process wherein the metallic objects are supplied with the dyeing gas and wherein composition and amount of the dying gas are adjusted according to a desired colour of the metallic objects.

8. Use of the dyeing gas according to claim 7, wherein oxidising, reducing or inert gases or their mixtures are used as the dyeing gas.

## Patentansprüche

1. Verfahren zum Färben von metallischen Gegenständen im Lauf eines Pulverspritzgussverfahrens, **dadurch gekennzeichnet, dass** den metallischen Gegenständen ein färbendes Gas zugeführt wird, wobei Zusammensetzung und Menge des färbenden Gases einer gewünschten Farbe der metallischen Gegenstände entsprechend eingestellt werden.

2. Verfahren gemäß Anspruch 1, wobei das färbende Gas während einer Phase des Vorsinterns und/oder während einer Phase des Sinterns eingeblasen wird.

3. Verfahren gemäß Anspruch 1 oder 2, wobei oxidierende, reduzierende oder inerte Gase oder ihre Gemische als das färbende Gas verwendet werden.

4. Verfahren gemäß einem der vorstehenden Ansprüche, wobei Argon mit Sauerstoff oder Argon mit Wasserstoff als färbendes Gas verwendet werden.

5. Verfahren gemäß einem der vorstehenden Ansprüche, wobei die metallischen Gegenstände eine Temperatur von wenigstens 450 °C aufweisen.

6. Verfahren gemäß einem der vorstehenden Ansprüche, wobei die gefärbten metallischen Gegenstände als Schmuckgegenstände verwendet werden.

7. Verwendung eines färbenden Gases zum Färben von metallischen Gegenständen im Verlauf eines Pulverspritzgussverfahrens, wobei den metallischen Gegenständen ein färbendes Gas zugeführt wird und wobei Zusammensetzung und Menge des färbenden Gases einer gewünschten Farbe der metallischen Gegenstände entsprechend eingestellt werden.

8. Verwendung des färbenden Gases gemäß Anspruch 7, wobei oxidierende, reduzierende oder inerte Gase oder ihre Gemische als das färbende Gas verwendet werden.

## Revendications

1. Procédé de coloration d'objets métalliques au cours d'un processus de moulage par injection de poudre **caractérisé en ce qu'**un gaz de coloration est apporté aux objets métalliques, la composition et la quantité du gaz de coloration étant ajustées en fonction d'une couleur souhaitée des objets métalliques.

2. Procédé selon la revendication 1, dans lequel le gaz de coloration est injecté au cours d'une phase de préfrittage et/ou au cours d'une phase de frittage.

3. Procédé selon la revendication 1 ou 2, dans lequel des gaz oxydants, réducteurs ou inertes, ou leurs mélanges, sont utilisés en tant que gaz de coloration.

4. Procédé selon l'une quelconque des revendications précédentes, dans lequel de l'argon avec de l'oxygène ou de l'argon avec de l'hydrogène est utilisé en tant que gaz de coloration.

5. Procédé selon l'une quelconque des revendications précédentes, dans lequel les objets métalliques présentent une température d'au moins 450 °C.

6. Procédé selon l'une quelconque des revendications précédentes, dans lequel les objets métalliques colorés sont employés comme bijoux.

7. Utilisation d'un gaz de coloration pour colorer des objets métalliques au cours d'un processus de moulage par injection de poudre, dans laquelle le gaz de coloration est apporté aux objets métalliques et dans laquelle la composition et la quantité du gaz de coloration sont ajustées en fonction d'une couleur souhaitée des objets métalliques.

8. Utilisation du gaz de coloration selon la revendication 7, dans laquelle des gaz oxydants, réducteurs ou inertes, ou leurs mélanges, sont utilisés en tant que gaz de coloration.
